(19) **Europäisches Patentamt**
**European Patent Office**
**Office européen des brevets**

(11) **EP 4 419 867 B1**

(12) **FASCICULE DE BREVET EUROPEEN**

(45) Date de publication et mention
de la délivrance du brevet:
**09.07.2025 Bulletin 2025/28**

(21) Numéro de dépôt: **22793546.7**

(22) Date de dépôt: **26.09.2022**

(51) Classification Internationale des Brevets (IPC):
**G01B 11/26** (2006.01)  **B60D 1/62** (2006.01)
**B62D 13/06** (2006.01)

(52) Classification Coopérative des Brevets (CPC):
**G01B 11/26; B60D 1/62; B62D 13/06**

(86) Numéro de dépôt international:
**PCT/EP2022/076699**

(87) Numéro de publication internationale:
**WO 2023/066610 (27.04.2023 Gazette 2023/17)**

(54) **PROCÉDÉ DE DÉTERMINATION DE LA POSITION ANGULAIRE D'UN VÉHICULE COMPLEXE À DEUX AXES DE ROTATION ET SYSTÈME CONFIGURÉ POUR METTRE EN OEUVRE UN TEL PROCÉDÉ**

VERFAHREN ZUR BESTIMMUNG DER WINKELPOSITION EINES KOMPLEXEN FAHRZEUGS MIT ZWEI DREHACHSEN UND SYSTEM ZUR IMPLEMENTIERUNG SOLCH EINES VERFAHRENS

METHOD FOR DETERMINING THE ANGULAR POSITION OF A COMPLEX VEHICLE WITH TWO AXES OF ROTATION, AND SYSTEM CONFIGURED TO IMPLEMENT SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2021 FR 2111234**

(43) Date de publication de la demande:
**28.08.2024 Bulletin 2024/35**

(73) Titulaire: **Continental Autonomous Mobility Germany GmbH**
**85057 Ingolstadt (DE)**

(72) Inventeurs:
• **POVEDA CARIAS, Vicente**
**31100 TOULOUSE (FR)**
• **GUERRERO, David**
**31100 TOULOUSE (FR)**
• **VIMORT, Jean-Baptiste**
**31100 TOULOUSE (FR)**

(74) Mandataire: **Continental Corporation**
**c/o Continental Automotive Technologies GmbH**
**Intellectual Property**
**Guerickestraße 7**
**60488 Frankfurt a. Main (DE)**

(56) Documents cités:
**WO-A1-2019/202317    FR-A1- 3 106 560**

EP 4 419 867 B1

## Description

### [Domaine technique]

La présente demande de brevet se rapporte à un procédé de détermination de la position angulaire d'un véhicule, et qui comprend un tracteur, une plate-forme de remorquage articulée sur le tracteur au niveau d'un premier point d'ancrage, au moins autour d'un premier axe de rotation globalement perpendiculaire au plan général de la plate-forme de remorquage, et une remorque articulée sur la plate-forme de remorquage au niveau d'un second point d'ancrage, au moins autour d'un second axe de rotation globalement perpendiculaire au plan général de la plate-forme de remorquage, au niveau d'un second point d'ancrage.

Le procédé est mis en oeuvre par un système qui comprend un calculateur et une caméra orientée vers la remorque.

### [Etat de la technique antérieure]

De nombreuses technologies sont actuellement développées pour aider les conducteurs à la conduite de véhicules, en leur fournissant par exemple des informations supplémentaires sur la configuration du véhicule et sa position par rapport à son environnement. Ces technologies sont également nécessaires dans une perspective de véhicules complètement autonomes. C'est le cas pour les véhicules individuels, mais aussi pour des véhicules de transports, comprenant typiquement un véhicule tracteur et une remorque.

Pour l'assistance à la conduite de tels véhicules, et notamment pour des manœuvres visant à garer le véhicule, il est critique de connaître avec précision au moins l'angle de lacet de la remorque par rapport au véhicule tracteur.

Certaines configurations de véhicules à remorques sont particulièrement complexes, c'est le cas de véhicules présentant deux attelages, soit deux articulations, et qui se composent d'un véhicule tracteur, d'une plate-forme de remorquage articulée sur le tracteur, au niveau d'un premier point d'ancrage, et d'une remorque articulée sur la plate-forme, au niveau d'un second point d'ancrage.

On connaît notamment un type de véhicule à deux articulations dans lequel le tracteur est un poids lourd de type rigide.

On connaît par ailleurs du document FR3106560A1 un système de détermination de la position angulaire d'un véhicule à deux points de pivot, le système comprenant une caméra orientée vers la remorque. Un autre système de mesure d'angle d'articulation est connu de WO2019202317A1.

La plate-forme de remorquage est parfois désignée sous le terme anglais de « dolly » et c'est sur cette plateforme qu'une remorque ou une semi-remorque est ensuite attachée.

### [Problème technique restant posé]

Un problème constant constaté avec un tel type de véhicule à double articulations, autrement dit à double attelages, est la difficulté à manœuvrer du fait de la double rotation entre le tracteur et la remorque.

Il serait donc désirable d'assister le conducteur en lui fournissant un contrôle basé sur l'angle réel de la semi-remorque en lieu d'utiliser le volant, ce qui permet de mieux maîtriser la trajectoire de l'ensemble du véhicule dans une manœuvre de parking.

### [Exposé de l'invention]

La présente invention a notamment pour but de proposer un moyen de détermination de la position d'un véhicule à deux articulations.

En particulier, un but de l'invention est de permettre de déterminer au moins l'angle formé par une remorque par rapport à une plate-forme de remorquage qui est elle-même articulée par rapport au tracteur.

On atteint cet objectif, ainsi que d'autres apparaîtront à la lecture de la description qui suit, avec un procédé de détermination de la position angulaire d'un véhicule qui comprend un tracteur, une plate-forme de remorquage articulée sur le tracteur au niveau d'un premier point d'ancrage, au moins autour d'un premier axe de rotation globalement perpendiculaire au plan général de la plate-forme de remorquage, et une remorque articulée sur la plate-forme de remorquage au niveau d'un second point d'ancrage, au moins autour d'un second axe de rotation globalement perpendiculaire au plan général de la plate-forme de remorquage, au niveau d'un second point d'ancrage, procédé mis en œuvre par un système comprenant un calculateur et une caméra orientée vers la remorque, caractérisé en ce qu'il comprend les étapes suivantes :

- acquisition par la caméra d'une première image dans une première position de référence du véhicule, et détection d'au moins un point caractéristique de la remorque dans ladite première position, qui est observé dans la première image,

- acquisition par la caméra d'une deuxième image dans une seconde position du véhicule, et détection dudit point caractéristique dans la seconde position, qui est observé dans la deuxième image, le point caractéristique détecté étant le même pour chaque position,

- estimation de la position du point caractéristique dans la première position et la seconde position du véhicule, qui est observé dans la première image et dans la seconde image respectivement, par minimisation d'une fonction coût basée sur une itération de différentes valeurs de la hauteur du point caractéristique dans la première position du véhicule et du point caractéristique dans la seconde position du véhicule, suivant un axe perpendiculaire au plan général de la plate-forme de remorquage, et

- détermination de l'angle de rotation entre la remorque et la plate-forme de remorquage en se basant sur la position du point caractéristique estimé dans la première position et la seconde position au cours de l'étape d'estimation précédente. Le procédé selon l'invention offre l'avantage de pouvoir s'adapter à différents types de véhicule, en particulier différents types de remorques qui présentent des géométries distinctes, comme une benne, une remorque de grumes de bois ou une remorque du type citerne.

Suivant d'autres caractéristiques optionnelles du procédé selon invention, prises seules ou en combinaison :

- la fonction coût utilisée dans l'étape d'estimation de la position du point caractéristique est la suivante :

$$co\hat{u}t = \left| \lVert P_{RLA} - M_A \rVert - \lVert P_{RLB} - M_B \rVert \right|$$

avec :

- $P_{RLA}$ le point qui matérialise l'intersection entre un plan imaginaire parallèle au plan général de la plate-forme de remorquage et de hauteur variable, et un rayon optique de la caméra qui passe par le point caractéristique de la première position,

- $M_A$ le second point d'ancrage dans la première position,

- $P_{RLB}$ le point qui matérialise l'intersection entre ledit plan imaginaire parallèle au plan général de la plate-forme de remorquage et de hauteur variable, et un rayon optique de la caméra qui passe par le point caractéristique de la seconde position, et

- $M_B$ le second point d'ancrage dans la seconde position ;

[0015] - l'étape de détermination géométrique de l'angle de rotation entre la remorque et la plate-forme de remorquage est obtenue par le calcul suivant :

$$\alpha 2 = 2 * sin^{-1} \left( \frac{|F_{R\hat{y}B} - F_{R\hat{y}A}|/2}{|F_{R\hat{y}A} - M|} \right)$$

avec :

- $F_{r\hat{y}B}$ le point caractéristique estimé dans la seconde

position,

- $F_{r\hat{y}A}$ le point caractéristique estimé dans la première position, et

- M le second point d'ancrage. On notera que le procédé est basé sur des calculs simples qui favorisent une exécution rapide par un calculateur ;

La présente invention se rapporte également à un système de détermination de la position angulaire d'un véhicule qui comprend un tracteur, une plate-forme de remorquage articulée sur le tracteur au niveau d'un premier point d'ancrage, au moins autour d'un premier axe de rotation globalement perpendiculaire au plan général de la plate-forme de remorquage, et une remorque articulée sur la plate-forme de remorquage au niveau d'un second point d'ancrage, au moins autour d'un second axe de rotation globalement perpendiculaire au plan général de la plate-forme de remorquage, au niveau d'un second point d'ancrage, procédé mis en œuvre par un système comprenant un calculateur et une caméra orientée vers la remorque, caractérisé en ce qu'il est configuré pour mettre œuvre le procédé du type décrit précédemment.

Aussi, la présente invention se rapporte à un produit programme d'ordinateur, comprenant des instructions de code pour la mise en œuvre du procédé décrit précédemment.

**[Description des dessins]**

D'autres caractéristiques et avantages de l'invention ressortiront à la lecture de la description qui suit, en référence aux figures annexées, qui illustrent :

[Fig. 1] : une vue schématique de côté d'un véhicule à deux articulations comprenant successivement un tracteur, une plate-forme de remorquage et une remorque, auquel est appliqué le procédé selon l'invention ;

[Fig. 2] : une vue schématique de dessus du véhicule de la figure 1 dans une première position de référence ;

[Fig. 3] : une vue schématique de dessus du véhicule de la figure 1 dans une seconde position dans laquelle la plate-forme de remorquage délimite un angle non nul avec le tracteur et avec la remorque ;

[Fig. 4] : une vue schématique en perspective du véhicule de la figure 1 dans sa première position de référence ;

[Fig. 5] : une vue schématique en perspective du véhicule de la figure 1 dans sa seconde position ;

[Fig. 6] : un organigramme du déroulement des étapes du procédé selon l'invention ;

[Fig. 7] : un schéma géométrique de la position estimée du point caractéristique dans la première image et dans la seconde image par rapport au second point d'ancrage.

Pour plus de clarté, les éléments identiques ou similaires sont repérés par des signes de référence identiques ou similaires sur l'ensemble des figures.

**[Description des modes de réalisation]**

Pour clarifier les pièces de la présente demande de brevet, on adoptera à titre non limitatif la terminologie horizontale et vertical en référence au sol sur lequel se déplace le véhicule, le sol étant considéré comme horizontal.

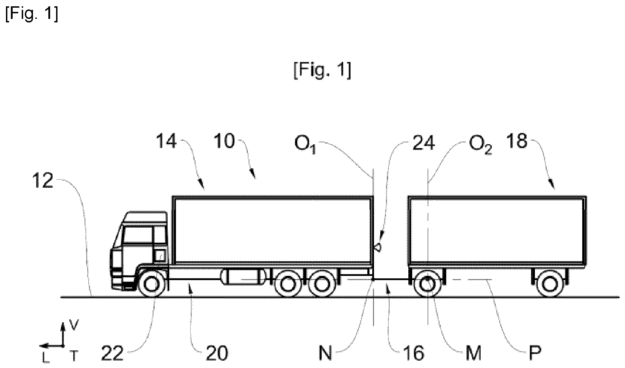

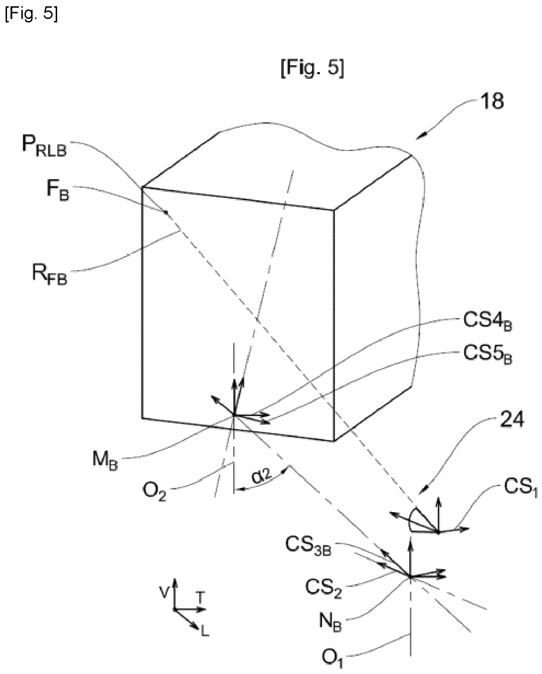

De plus, on adoptera à titre non limitatif la terminologie longitudinal, vertical et transversal en référence au trièdre L, V, T indiqués aux figures 1 à 5.

On a représenté à la figure 1 un véhicule 10 automobile en configuration d'utilisation sur un sol 12 horizontal.

Le véhicule 10 comprend un tracteur 14, une plate-forme de remorquage 16 articulée par une liaison rotule sur le tracteur 14 au niveau d'un premier point d'ancrage N.

La liaison rotule entre la plate-forme de remorquage 16 et le tracteur 14 autorise trois degrés de liberté en rotation, et en particulier un degré de rotation autour d'un premier axe O1 de rotation vertical et perpendiculaire au sol 12.

De plus, une remorque 18 est montée articulée par une liaison rotule sur la plate-forme de remorquage 16 au niveau d'un second point d'ancrage M.

La liaison rotule entre la remorque 18 et la plate-forme de remorquage 16 autorise trois degrés de liberté en rotation, et en particulier un degré de rotation autour d'un second axe O2 de rotation vertical et perpendiculaire au plan général de la plate-forme de remorquage.

On a également représenté à la figure 1 un système 20 qui comprend un calculateur 22 et une caméra 24. La caméra 24 est montée sur le tracteur 14 et est adaptée pour acquérir des images de la remorque 18.

Dans ce but, la caméra 24 est avantageusement positionnée à l'arrière du tracteur 14, en étant dirigée vers la remorque 18, avec un axe optique O3 longitudinal sensiblement parallèle à l'axe O4 du tracteur 14.

En variante, la caméra 24 peut présenter une autre orientation, et il faut alors réaliser une calibration de la caméra 24 pour connaître cette orientation et en tenir compte pour la détermination des angles du véhicule 10.

Le calculateur 22 est associé à une mémoire (non représentée) comprenant un programme d'ordinateur pour l'exécution du procédé selon l'invention décrit ci-après. Le calculateur 22 peut être un processeur, microprocesseur, contrôleur, microcontrôleur ou autre.

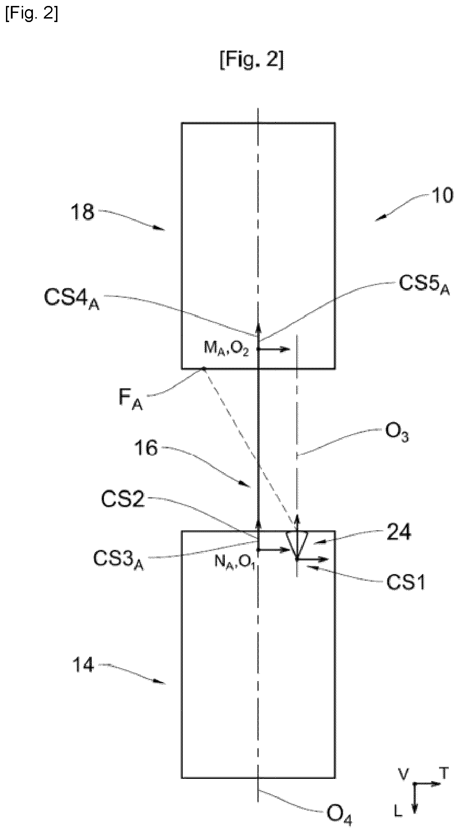

Sur la figure 2, on a représenté schématiquement le véhicule 10 dans une première position de référence qui correspond à un déplacement rectiligne du véhicule 10, dans laquelle l'angle de rotation entre le tracteur 14 et la plate-forme de remorquage 16 est nul.

De même, l'angle de rotation entre la plate-forme de remorquage 16 et la remorque 18 est nul.

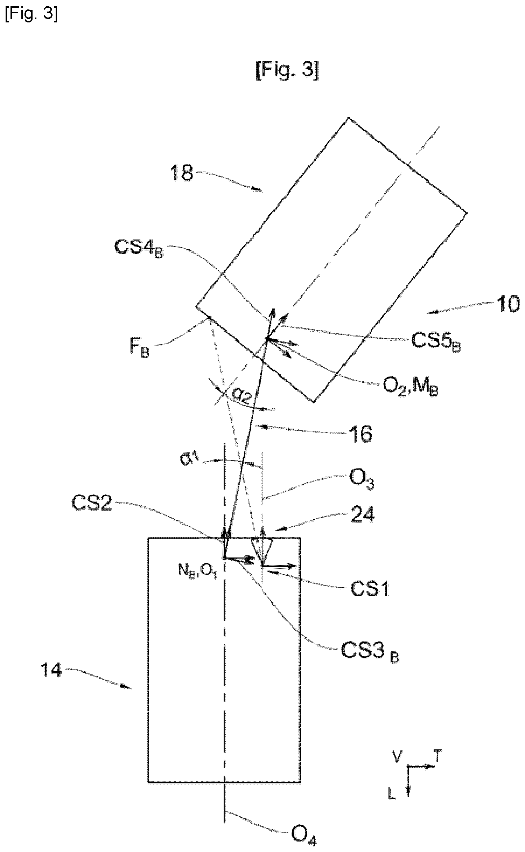

Sur la figure 3, on a représenté schématiquement le véhicule 10 dans une seconde position qui correspond à un déplacement non rectiligne du véhicule 10, dans laquelle l'angle de rotation $\alpha 1$ entre le tracteur 14 et la plate-forme de remorquage 16 est non nul.

De même, l'angle de rotation $\alpha 2$ entre la plate-forme de remorquage 16 et la remorque 18 est non nul.

Pour faciliter la compréhension de la description, les références indicées par la lettre majuscule A et la lettre majuscule B font référence à la première position et à la deuxième position du véhicule 10 respectivement.

On notera notamment que le premier point d'ancrage N et le second point d'ancrage M représentés à la figure 1 sont notés $N_A$, $N_B$ et $M_A$, $M_B$ en référence à la première position et à la deuxième position du véhicule 10 respectivement. Cette notation s'applique mutatis mutandis aux autres références.

Sur les figures 2 et 3, différents systèmes de coordonnées sont représentés. Le système de coordonnées CS1 a comme référentiel le tracteur 14 et comme centre le centre optique de la caméra 24.

Le système de coordonnées CS2 a comme référentiel le tracteur 14 et comme centre le premier axe O1 de rotation au niveau du premier point d'ancrage N, le système de coordonnées CS2 est aligné avec le tracteur 14.

Le système de coordonnées CS3 a comme référentiel la plate-forme de remorquage 16 et comme centre le premier axe O1 de rotation au niveau du premier point d'ancrage N, le système de coordonnées CS3 est aligné avec la plate-forme de remorquage 16.

Le système de coordonnées CS4 a comme référentiel la plate-forme de remorquage 16 et comme centre le second axe O2 de rotation au niveau du second point d'ancrage M, le système de coordonnées CS4 est aligné avec la plate-forme de remorquage 16.

Enfin, le système de coordonnées CS5 a comme référentiel la remorque 18 et comme centre le second axe O2 de rotation au niveau du second point d'ancrage M, le système de coordonnées CS5 est aligné avec la remorque 18.

La relation entre les systèmes de coordonnées CS1 et CS2 est une unique translation du centre optique de la caméra 24 jusqu'au premier point d'ancrage N, et une rotation si la caméra 24 n'est pas alignée dans l'axe du tracteur 14.

La relation entre les systèmes de coordonnées CS2 et CS3 est une rotation à trois degrés de liberté autour du premier point d'ancrage N.

La relation entre les systèmes de coordonnées CS3 et CS4 est une translation du premier point d'ancrage N jusqu'au second point d'ancrage M.

Enfin, la relation entre les systèmes de coordonnées CS4 et CS5 est une rotation à trois degrés de liberté autour du second point d'ancrage M, rotation que l'on simplifie à un degré de liberté autour du second axe O2 en considérant que le sol 12 est plan.

Aussi, on indicera les systèmes de coordonnées CS3, CS4, CS5 avec la lettre majuscule A et la lettre majuscule B, en référence à la première position et à la deuxième position du véhicule 10 respectivement. Par exemple, CS3B désigne le système de coordonnées CS3 dans la seconde position du véhicule 10, comme sur la figure 3. Les systèmes de coordonnées CS1 et CS2 ne sont pas concernés par les indices A et B car ils sont immobiles dans le référentiel du véhicule 10.

On notera H1-2 une matrice de transformation homogène du système de coordonnées CS1 au système de coordonnées CS2, cette matrice H1-2 de transformation homogène étant connue.

Ce type de notation s'applique mutatis mutandis aux autres matrices de transformation homogène.

La matrice H1-2 est une concaténation d'une matrice de rotation et de translation telle que :

$$P1 = H1\text{-}2*P2$$

Où P1 sont les coordonnées d'un point P dans le système de coordonnées CS1 :

$$P1 = \begin{pmatrix} x1 \\ y1 \\ z1 \\ 1 \end{pmatrix}$$

et P2 sont les coordonnées du point P dans le système de coordonnées CS2 :

$$P2 = \begin{pmatrix} x2 \\ y2 \\ z2 \\ 1 \end{pmatrix}$$

On notera :

$$H1 \rightarrow 2 = \begin{bmatrix} Raa12 & Rab12 & Rac12 & Tx12 \\ Rba12 & Rbb12 & Rbc12 & Ty12 \\ Rca12 & Rcb12 & Rcc12 & Tz12 \\ 0 & 0 & 0 & 1 \end{bmatrix}$$

Où Rij12 sont les termes de rotation entre les systèmes de coordonnées CS1 et CS2 et Ti12 sont les termes de translation entre les systèmes de coordonnées CS1 et CS2.

Toutes les notations précédentes s'appliquent mutatis mutandis aux autres systèmes de coordonnées.

Aussi, on notera que l'on connaît les transformations $H2\text{-}3_A$, $H3_A\text{-}4_A$ et $H4_A\text{-}5_A$.

Pour toute autre position, et en particulier pour la seconde position du véhicule 10, on connaît les transformations $H2\text{-}3_B$ et $H3_B\text{-}4_B$, mais on doit identifier la transformation $H4_B\text{-}5_B$ qui correspond à la rotation entre la remorque 18 et la plate-forme de remorquage 16.

On notera également que $M_A$ désigne la position du second point d'ancrage dans la première position du véhicule 10 et que $M_B$ désigne la position du second point d'ancrage dans la seconde position du véhicule 10.

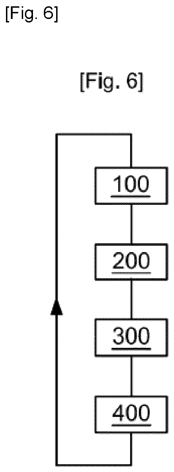

On a représenté à la figure 6 les étapes du procédé de détermination de la position angulaire du véhicule 10, procédé mis en œuvre par le système 20 décrit précédemment, selon l'invention.

Plus particulièrement, le procédé selon l'invention vise à déterminer l'angle de rotation $\alpha2$ entre la remorque 18 et la plate-forme de remorquage 16, en se basant sur la correspondance de points caractéristiques entre différentes positions et images associées, et une estimation de l'angle de rotation $\alpha1$ entre le tracteur 14 et la plate-forme de remorquage 16. Des méthodes d'estimation de l'angle de rotation entre deux éléments montés pivotants sont connues de l'homme du métier et ne seront donc pas décrites dans la présente description.

On connaît notamment une méthode qui consiste à utiliser un capteur mécatronique pour déterminer l'angle de rotation $\alpha1$ entre le tracteur 14 et la plate-forme de remorquage 16.

Le procédé comporte une première étape d'acquisition 100 d'une première image par la caméra 24, dans la première position de référence du véhicule 10, illustrée à la figure 2. De préférence, dans la première position de référence, les angles $\alpha1$ et $\alpha2$ sont nuls. A cet égard, le véhicule 10 a de préférence circulé sur une ligne droite sur une distance suffisante pour pouvoir adopter cette position de référence.

De plus, la première étape d'acquisition 100 comprend une détection d'un ensemble de points caractéristiques dans la première position, en se basant sur la première image associée. Avantageusement, l'ensemble de points caractéristique comprend des points saillants de la remorque 18.

La détection de l'ensemble de points caractéristiques comprend une phase de segmentation qui est connue de l'homme du métier et qui vise à séparer les points caractéristiques appartenant à l'objet d'intérêt, ici la remorque 18, de ceux qui sont sans intérêt, comme l'arrière-plan ou la plate-forme de remorquage 16 par exemple.

Par soucis de clarté, l'exemple de réalisation du procédé selon l'invention décrit ci-après prend en compte un seul point caractéristique FA représenté à la figure 2.

A la suite de la première étape d'acquisition 100, le procédé comprend une seconde étape d'acquisition 200 d'une deuxième image par la caméra 24, dans la seconde position du véhicule 10, illustrée à la figure 3, après circulation du véhicule 10.

Aussi, la seconde étape d'acquisition 200 comprend une détection d'au moins une partie des points caractéristiques détectés dans la première position de référence du véhicule 10. Par soucis de clarté, seul le point caractéristique $F_B$ de la seconde position observé dans la seconde image, qui correspond au point caractéristique $F_A$ détecté dans la première position observé dans la première image, est pris en compte dans le présent exemple de réalisation de l'invention.

Cette détection peut être mise en œuvre en réalisant un suivi de la position des points caractéristiques entre la première et la deuxième position, selon des méthodes connues de l'homme du métier.

Optionnellement, plusieurs images peuvent être acquises lors de la seconde étape d'acquisition 200 afin d'augmenter la précision sur les valeurs déterminées des paramètres.

Puisque la remorque 18 est un objet rigide qui est relié sur le second point d'ancrage M, la distance entre n'importe quel point caractéristique et le second point d'ancrage M est constante dans n'importe quelle position du véhicule 10.

Par conséquent, il est possible d'établir l'équation suivante :

$$\|M_A - F_A\| = \|M_B - F_B\|$$

A la suite de la seconde étape d'acquisition 200, le procédé comprend une étape d'estimation 300 de la position du point caractéristique $F_A$, $F_B$ dans la première position et la seconde position du véhicule 10, en référence à la première image et à la seconde image respectivement, par minimisation d'une fonction coût basée sur une itération de différentes valeurs de la hauteur y du point caractéristique $F_A$ dans la première position du véhicule 10 et du point caractéristique $F_B$ dans la seconde position du véhicule 10.

On entend par hauteur y une distance qui s'étend suivant un axe perpendiculaire au plan général P de la plate-forme de remorquage 16, depuis le centre du système de coordonnées concerné.

Pour rappel les points caractéristiques $F_A$ et $F_B$ correspondent à un même point F de la remorque 18 lorsque le véhicule 10 occupe sa première position et sa seconde position respectivement.

On pose l'hypothèse selon laquelle toutes les rotations dans $H4_B$-$5_B$ sont réalisées autour de l'axe vertical du système de coordonnées $CS4_B$, en partant du principe que les mouvements de roulis et de tangage entre la plate-forme de remorquage 16 et la remorque 18 du véhicule 10 sont négligeables.

Cette hypothèse implique que la hauteur du point caractéristique $F_A$ dans $CS4_A$ et dans $CS5_A$, et la hauteur du point caractéristique $F_B$ dans $CS4_B$ et $CS5_B$ sont égales.

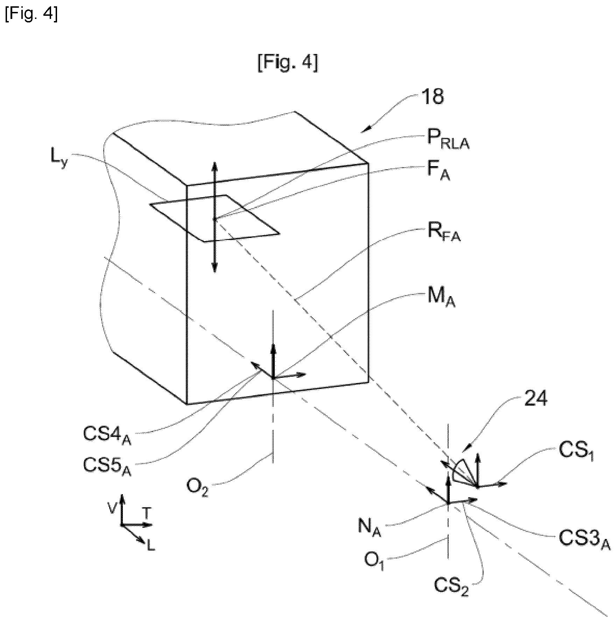

On définit un plan Ly imaginaire horizontal à une hauteur y, qui est parallèle au plan général de la plate-forme de remorquage 16, comme on peut le voir à la figure 4.

Aussi, on définit le point $P_{RLA}$ comme étant le point d'intersection entre le plan Ly imaginaire de hauteur y variable, et un rayon optique $R_{FA}$ partant de la caméra 24 qui passe par le point caractéristique $F_A$ observé dans la première image. Le rayon optique $R_{FA}$ passe par le centre optique de la caméra 24 et relie le point caractéristique FA au système de coordonnées CS1 de la caméra 24.

Pour exprimer le point $P_{RLA}$ dans le système de coordonnées $CS5_A$ on utilise H1-2, H2-$3_4$, $H3_A$-$4_A$ et $H4_A$-$5_A$.

De même, on définit le point $P_{RLB}$ comme étant le point d'intersection entre le plan Ly imaginaire de hauteur y variable, et un rayon optique $R_{FB}$ partant de la caméra 24 qui passe par le point caractéristique $F_B$ observé dans la seconde image. Le rayon optique $R_{FB}$ passe par le centre optique de la caméra 24 et relie le point caractéristique $F_B$ au système de coordonnées CS1 de la caméra 24.

Pour exprimer le point $P_{RLB}$ dans le système de coordonnées $CS4_B$ on utilise H1-2, H2-$3_B$ et $H3_B$-$4_B$.

Au cours de l'étape d'estimation 300 de la position des points caractéristiques $F_A$, $F_B$, on considère la hauteur ŷ comme étant la valeur qui minimise une fonction coût basée sur une itération de différentes valeurs de ladite hauteur y.

Autrement dit, on considère la hauteur y comme un paramètre permettant d'évaluer l'erreur de hauteur grâce à une fonction coût.

Plus particulièrement, la fonction coût est basée sur la minimisation de la différence entre une première distance qui est délimitée entre le second point d'ancrage $M_A$ et le point d'intersection $P_{RLA}$ entre le plan Ly imaginaire de hauteur y variable et le rayon optique $R_{FA}$ de la caméra 24 qui passe par le point caractéristique $F_A$ de la première image, et une seconde distance qui est délimitée entre le second point d'ancrage $M_B$ et le point d'intersection $P_{RLB}$ entre le plan Ly imaginaire de hauteur y variable et le rayon optique $R_{FB}$ de la caméra 24 qui passe par le point caractéristique $F_B$ de la seconde image.

La fonction coût utilisée dans l'étape d'estimation 300 est la suivante :

$$co\hat{u}t = |\|P_{RLA} - M_A\| - \|P_{RLB} - M_B\||$$

Avantageusement, le calculateur 22 utilise un algorithme d'optimisation pour minimiser la fonction coût.

En considérant que $P_{RLA}$ est exprimé dans le système de coordonnées $CS5_A$ et que $M_A$ est la référence du système de coordonnées CS5$_A$, alors on peut écrire :

$$\|P_{RLA} - M_A\| = \|P_{RLA}\|$$

En considérant que P$_{RLB}$ est exprimé dans le système de coordonnées CS4$_B$ et que M$_B$ est la référence du système de coordonnées CS4$_B$, alors on peut écrire :

$$\|P_{RLB} - M_B\| = \|P_{RLB}\|$$

Ainsi la fonction coût devient :

$$co\hat{u}t = |\|P_{RLA}\| - \|P_{RLB}\||$$

Avantageusement, la valeur de la hauteur y est initialisée dans la fonction coût de sorte que les points P$_{RLA}$ et P$_{RLB}$ démarrent dans une position éloignée du centre optique de la caméra 24.

L'étape d'estimation 300 permet d'estimer la hauteur qui minimise la fonction coût décrite ci-dessus, cette hauteur estimée étant notée « ŷ ».

La hauteur estimée ŷ permet de déterminer les points estimés F$_{R\hat{y}A}$ et F$_{R\hat{y}B}$ qui fournissent une position dans l'espace approximative des points caractéristiques F$_A$ et F$_B$ dans la première position et la seconde position du véhicule 10 respectivement, dans les systèmes de coordonnées CS5$_A$ et CS4$_B$ respectivement.

A la suite de l'étape d'estimation 300, le procédé comprend une étape de détermination 400 géométrique de l'angle de rotation α2 entre la remorque 18 et la plate-forme de remorquage 16, en se basant sur les points caractéristiques estimés F$_{r\hat{y}A}$, F$_{r\hat{y}B}$ dans la première position et la seconde position du véhicule 10.

On peut exprimer le point F$_{r\hat{y}A}$ dans le système de coordonnées CS5$_A$ de la façon suivante :

$$F_{R\hat{y}A} = \begin{bmatrix} x_{FA} \\ y_{FA} \\ z_{FA} \\ 1 \end{bmatrix}$$

De même, on peut exprimer le point F$_{r\hat{y}B}$ dans le système de coordonnées CS4B de la façon suivante :

$$F_{R\hat{y}B} = \begin{bmatrix} x_{FB} \\ y_{FB} \\ z_{FB} \\ 1 \end{bmatrix}$$

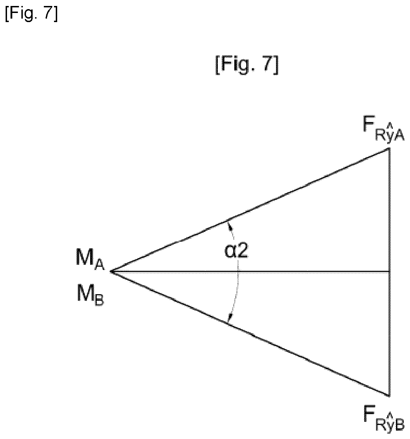

Les points caractéristiques estimés F$_{r\hat{y}A}$, F$_{r\hat{y}B}$ sont représentés à la figure 7 qui est obtenue en superposant et les centres des systèmes de coordonnées CS5$_A$ et CS4$_B$, en alignant les systèmes de coordonnées CS5$_A$ et CS4$_B$, en y plaçant les points caractéristiques estimés F$_{r\hat{y}A}$, F$_{r\hat{y}B}$ à partir de leurs coordonnées préablement calculées, puis en projetant l'ensemble selon l'axe vertical qui définit la hauteur des points caractéristiques estimés F$_{r\hat{y}A}$, F$_{r\hat{y}B}$.

Ainsi, la figure 7 est une projection des points caractéristiques estimés F$_{r\hat{y}A}$, F$_{r\hat{y}B}$, et du second point d'ancrage M$_A$, M$_B$ vus de dessus où :

$$F_{R\hat{y}A} = (x_{FA}, z_{FA})$$

et

$$F_{R\hat{y}B} = (x_{FB}, z_{FB})$$

A partir des points caractéristiques estimés F$_{r\hat{y}A}$, F$_{r\hat{y}B}$, on calcule l'angle de rotation α2 entre la remorque 18 et la plate-forme de remorquage 16 de la manière suivante :

$$\alpha 2 = 2 * sin^{-1}\left(\frac{|F_{R\hat{y}B} - F_{R\hat{y}A}|/2}{|F_{R\hat{y}A} - M|}\right)$$

$$\alpha 2 = 2 * sin^{-1}\left(\frac{\sqrt{(x_{FB} - x_{FA})^2 + (z_{FB} - z_{FA})^2}}{2 * \sqrt{x_{FA}^2 + z_{FA}^2}}\right)$$

Ainsi, la présente invention offre une solution qui permet de déterminer l'angle de rotation α2 entre la remorque 18 et la plate-forme de remorquage 16 au moyen d'une unique caméra 24.

La détermination de l'angle de rotation α2 entre la remorque 18 et la plate-forme de remorquage 16 rend possible l'assistance pour les manœuvres en marche arrière d'un véhicule à remorque à deux points d'articulation.

De plus, le procédé et le système de détermination de la position angulaire d'un véhicule selon l'invention sont basés sur des calculs simples qui permettent une exécution rapide par un calculateur.

Enfin, le procédé et le système de détermination de la position angulaire d'un véhicule selon l'invention sont basés sur la détermination de la position d'un ensemble de points caractéristiques de la remorque, ce qui permet une adaptabilité à un ensemble important de types de véhicules.

On notera que le procédé selon l'invention nécessite certaines conditions pour fonctionner de façon optimum.

En effet, si la caméra 24 et le point caractéristique F$_A$, F$_B$ dont la position est à déterminer sont à une même hauteur dans le système de coordonnées dans lequel la hauteur y est itérée, alors le procédé présentera des difficultés à déterminer la position du point caractéristique.

Pour palier ceci, les hypothèses suivantes doivent être validées selon le nombre de dégrées de liberté considérés entre le tracteur 14, la plate-forme de remorquage 16 et la remorque 18, au niveau du premier point d'ancrage N et du second point d'ancrage M.

Si l'on considère que la rotation au niveau du premier point d'ancrage N et la rotation au niveau du deuxième point d'ancrage M n'ont lieu qu'autour d'un axe perpendiculaire au plan général P de la plate-forme de remorquage 16, sur un sol 12 plat, alors il suffit de suivre un point caractéristique qui se trouve à une hauteur différente de la caméra 24.

Si l'on considère que la rotation au niveau du premier point d'ancrage N a lieu sur les trois degrés de liberté et la rotation au niveau du deuxième point d'ancrage M n'a lieu qu'autour d'un axe perpendiculaire au plan général P de la plate-forme de remorquage 16, alors il suffit de suivre un point caractéristique tel que la distance entre ce point et le deuxième point d'ancrage M soit supérieure à la distance entre la caméra 24 et le premier point d'ancrage N.

Si l'on considère que la rotation au niveau du premier point d'ancrage N et la rotation au niveau du deuxième point d'ancrage M ont lieu sur les trois dégrées de liberté, alors il est nécessaire d'appliquer les étapes du procédé sur plusieurs points caractéristiques se trouvant a des hauteurs différentes et à des distances relativement éloignées du deuxième point d'ancrage M. Cette configuration donnera un angle pour chaque point caractéristique, et vu que le tracteur 14 se décale avec un unique angle de lacet on peut déduire cet angle avec toute méthode d'estimation de paramètres.

## Revendications

1. Procédé de détermination de la position angulaire d'un véhicule (10) qui comprend un tracteur (14), une plate-forme de remorquage (16) articulée sur le tracteur (14) au niveau d'un premier point d'ancrage (N), au moins autour d'un premier axe (O1) de rotation globalement perpendiculaire au plan général (P) de la plate-forme de remorquage (16), et une remorque (18) articulée sur la plate-forme de remorquage (16) au niveau d'un second point d'ancrage (M), au moins autour d'un second axe (O2) de rotation globalement perpendiculaire au plan général (P) de la plate-forme de remorquage (16), au niveau d'un second point d'ancrage (M), procédé mis en œuvre par un système (20) comprenant un calculateur (22) et une caméra (24) orientée vers la remorque (18), le procédé comprenant les étapes suivantes :

   - acquisition (100) par la caméra (24) d'une première image dans une première position de référence du véhicule (10), et détection d'au moins un point caractéristique ($F_A$) de la remorque (18) dans ladite première position, qui est observé dans la première image,
   - acquisition (200) par la caméra (24) d'une deuxième image dans une seconde position du véhicule (10), et détection dudit point caractéristique ($F_B$) dans la seconde position, qui est observé dans la deuxième image, le point caractéristique ($FA$, $F_B$) détecté étant le même pour chaque position,

   le procédé étant **caractérisé en ce qu'**il comprend les étapes suivantes:

   - estimation (300) de la position du point caractéristique ($F_A$, $F_B$) dans la première position et la seconde position du véhicule (10), qui est observé dans la première image et dans la seconde image respectivement, par minimisation d'une fonction coût basée sur une itération de différentes valeurs de la hauteur (y) du point caractéristique ($F_A$) dans la première position du véhicule (10) et du point caractéristique ($F_B$) dans la seconde position du véhicule (10), suivant un axe perpendiculaire au plan général (P) de la plate-forme de remorquage (16), et
   - détermination (400) de l'angle de rotation ($\alpha 2$) entre la remorque (18) et la plate-forme de remorquage (16) en se basant sur la position du point caractéristique estimé ($F_{rŷA}$, $F_{rŷB}$) dans la première position et la seconde position au cours de l'étape d'estimation précédente.

2. Procédé selon la revendication 1, **caractérisé en ce que** la fonction coût utilisée dans l'étape d'estimation de la position du point caractéristique ($F_A$, $F_B$) est la suivante :

$$co\hat{u}t = |\|P_{RLA} - M_A\| - \|P_{RLB} - M_B\||$$

   avec :

   - $P_{RLA}$ le point qui matérialise l'intersection entre un plan (Ly) imaginaire parallèle au plan général (P) de la plate-forme de remorquage (16) et de hauteur (y) variable, et un rayon optique ($R_{FA}$) de la caméra (24) qui passe par le point caractéristique ($F_A$) de la première position,
   - $M_A$ le second point d'ancrage dans la première position,
   - $P_{RLB}$ le point qui matérialise l'intersection entre ledit plan (Ly) imaginaire parallèle au plan général (P) de la plate-forme de remorquage (16) et de hauteur (y) variable, et un rayon optique

($R_{FB}$) de la caméra (24) qui passe par le point caractéristique ($F_B$) de la seconde position, et
- $M_B$ le second point d'ancrage dans la seconde position.

3. Procédé selon l'une quelconque des revendications précédentes, **caractérisé en ce que** l'étape de détermination (400) géométrique de l'angle ($\alpha2$) de rotation entre la remorque (18) et la plate-forme de remorquage (16) est obtenue par le calcul suivant :

$$\alpha2 = 2 * sin^{-1} \left( \frac{|F_{R\hat{y}B} - F_{R\hat{y}A}|/2}{|F_{R\hat{y}A} - M|} \right)$$

avec :

- $F_{r\hat{y}B}$ le point caractéristique estimé dans la seconde position,
- $F_{r\hat{y}A}$ le point caractéristique estimé dans la première position, et
- M le second point d'ancrage.

4. Système (20) de détermination de la position angulaire d'un véhicule (10) qui comprend un tracteur (14), une plate-forme de remorquage (16) articulée sur le tracteur (14) au niveau d'un premier point d'ancrage (N), au moins autour d'un premier axe (O1) de rotation globalement perpendiculaire au plan général (P) de la plate-forme de remorquage (16), et une remorque (18) articulée sur la plate-forme de remorquage (16) au niveau d'un second point d'ancrage (M), au moins autour d'un second axe (O2) de rotation globalement perpendiculaire au plan général (P) de la plate-forme de remorquage (16), au niveau d'un second point d'ancrage (M), le système (20) comprenant un calculateur (22) et une caméra (24) orientée vers la remorque (18), **caractérisé en ce qu'**il est configuré pour mettre œuvre le procédé selon l'une quelconque des revendications précédentes.

5. Produit programme d'ordinateur, comprenant des instructions de code qui conduisent le système selon la revendication 4 à mettre en œuvre les étapes du procédé selon l'une quelconque des revendications 1 à 3.

**Patentansprüche**

1. Verfahren zur Bestimmung der Winkelposition eines Fahrzeugs (10), das eine Zugmaschine (14), einen Dolly (16), der an der Zugmaschine (14) an einem ersten Verankerungspunkt (N) zumindest um eine erste Drehachse (O1), die insgesamt senkrecht zur Hauptebene (P) des Dollys (16) verläuft, gelenkig angebracht ist, und einen Anhänger (18) aufweist, der an dem Dolly (16) an einem zweiten Verankerungspunkt (M) zumindest um eine zweite Drehachse (O2), die insgesamt senkrecht zur Hauptebene (P) des Dollys (16) verläuft, an einem zweiten Verankerungspunkt (M) gelenkig angebracht ist, wobei das Verfahren von einem System (20) ausgeführt wird, das einen Rechner (22) und eine auf den Anhänger (18) ausgerichtete Kamera (24) aufweist, wobei das Verfahren die folgenden Schritte aufweist:

- Erfassen (100) eines ersten Bildes in einer ersten Referenzposition des Fahrzeugs (10) durch die Kamera (24) und Erfassen von mindestens einem charakteristischen Punkt ($F_A$) des Anhängers (18) in der ersten Position, der in dem ersten Bild beobachtet wird,
- Erfassen (200) eines zweiten Bildes in einer zweiten Position des Fahrzeugs (10) durch die Kamera (24) und Erfassen des charakteristischen Punktes ($F_B$) in der zweiten Position, der in dem zweiten Bild beobachtet wird, wobei der erfasste charakteristische Punkt ($F_A$, $F_B$) für jede Position derselbe ist,

wobei das Verfahren **dadurch gekennzeichnet ist, dass** es darüber hinaus die folgenden Schritte aufweist:

- Schätzen (300) der Position des charakteristischen Punktes ($F_A$, $F_B$) in der ersten Position und der zweiten Position des Fahrzeugs (10), der in dem ersten Bild bzw. in dem zweiten Bild beobachtet wird, durch Minimieren einer Verlustfunktion, die auf einer Iteration verschiedener Werte der Höhe (y) des charakteristischen Punktes ($F_A$) in der ersten Position des Fahrzeugs (10) und des charakteristischen Punktes ($F_B$) in der zweiten Position des Fahrzeugs (10) basiert, entlang einer Achse senkrecht zur Hauptebene (P) des Dollys (16), und
- Bestimmen (400) des Drehwinkels ($\alpha2$) zwischen dem Anhänger (18) und dem Dolly (16) auf der Grundlage der Position des geschätzten charakteristischen Punktes ($F_{r\hat{y}A}$, $F_{r\hat{y}B}$) in der ersten Position und der zweiten Position während des vorherigen Schätzschritts.

2. Verfahren nach Anspruch 1, **dadurch gekennzeichnet, dass** die Verlustfunktion, die im Schritt des Schätzens der Position des charakteristischen Punktes ($F_A$, $F_B$) verwendet wird, wie folgt lautet:

$$Verlust = |\, \|P_{RLA} - M_A\| - \|P_{RLB} - M_B\| \,|$$

wobei:

- $P_{RLA}$ der Punkt ist, der den Schnittpunkt zwischen einer imaginären Ebene (Ly), die parallel zur Hauptebene (P) des Dollys (16) verläuft und eine variable Höhe (y) hat, und einem optischen Strahl ($R_{FA}$) der Kamera (24), der durch den charakteristischen Punkt ($F_A$) der ersten Position verläuft, darstellt,

- $M_A$ der zweite Verankerungspunkt in der ersten Position ist,

- $P_{RLB}$ der Punkt ist, der den Schnittpunkt zwischen einer imaginären Ebene (Ly), die parallel zur Hauptebene (P) des Dollys (16) verläuft und eine variable Höhe (y) hat, und einem optischen Strahl ($R_{FB}$) der Kamera (24), der durch den charakteristischen Punkt ($F_B$) der zweiten Position verläuft, darstellt,

- $M_B$ der zweite Verankerungspunkt in der zweiten Position ist.

3. Verfahren nach einem der vorhergehenden Ansprüche, **dadurch gekennzeichnet, dass** der Schritt des geometrischen Bestimmens (400) des Drehwinkels ($\alpha$2) zwischen dem Anhänger (18) und dem Dolly (16) durch die folgende Berechnung erhalten wird:

$$\alpha 2 = 2 * sin^{-1}\left(\frac{|F_{R\hat{y}B}-F_{R\hat{y}A}|/2}{|F_{R\hat{y}A}-M|}\right)$$

wobei:

- $F_{r\hat{y}B}$ der geschätzte charakteristische Punkt in der zweiten Position ist,

- $F_{r\hat{y}A}$ der geschätzte charakteristische Punkt in der ersten Position ist, und

- M der zweite Verankerungspunkt ist.

4. System (20) zur Bestimmung der Winkelposition eines Fahrzeugs (10), das eine Zugmaschine (14), einen Dolly (16), der an der Zugmaschine (14) an einem ersten Verankerungspunkt (N) zumindest um eine erste Drehachse (O1), die insgesamt senkrecht zur Hauptebene (P) des Dollys (16) verläuft, gelenkig angebracht ist, und einen Anhänger (18) aufweist, der an dem Dolly (16) an einem zweiten Verankerungspunkt (M) zumindest um eine zweite Drehachse (O2), die insgesamt senkrecht zur Hauptebene (P) des Dollys (16) verläuft, an einem zweiten Verankerungspunkt (M) gelenkig angebracht ist, wobei das System (20) einen Rechner (22) und eine auf den Anhänger (18) ausgerichtete Kamera (24) aufweist, **dadurch gekennzeichnet, dass** es so konfiguriert ist, dass es das Verfahren nach einem der vorhergehenden Ansprüche ausführt.

5. Computerprogrammprodukt, das Codeanweisungen enthält, die das System nach Anspruch 4 dazu veranlassen, die Schritte des Verfahrens nach einem der Ansprüche 1 bis 3 auszuführen.

**Claims**

1. Method for determining the angular position of a vehicle (10) comprising a towing vehicle (14), a towing platform (16) articulated on the towing vehicle (14) at a first anchoring point (N), at least about a first axis of rotation (O1) generally perpendicular to the general plane (P) of the towing platform (16), and a trailer (18) articulated on the towing platform (16) at a second anchoring point (M), at least about a second axis of rotation (O2) generally perpendicular to the general plane (P) of the towing platform (16), at a second anchoring point (M), which method is implemented by a system (20) comprising a computer (22) and a camera (24) oriented toward the trailer (18), the method comprising the following steps of:

- the camera (24) acquiring (100) a first image in a first reference position of the vehicle (10), and of detecting at least one characteristic point ($F_A$) of the trailer (18) in said first position, which point is observed in the first image;
- the camera (24) acquiring (200) a second image in a second position of the vehicle (10), and of detecting said characteristic point ($F_B$) in the second position, which point is observed in the second image, the detected characteristic point (FA, $F_B$) being the same for each position;

the method being **characterized in that** it comprises the following steps:

- estimating (300) the position of the characteristic point ($F_A$, $F_B$) in the first position and the second position of the vehicle (10), which point is observed in the first image and in the second image, respectively, by minimizing a cost function based on an iteration of different values of the height (y) of the characteristic point ($F_A$) in the first position of the vehicle (10) and of the characteristic point ($F_B$) in the second position of the vehicle (10), along an axis perpendicular to the general plane (P) of the towing platform (16); and
- determining (400) the angle of rotation ($\alpha$2) between the trailer (18) and the towing platform (16) based on the position of the estimated characteristic point ($F_{r\hat{y}A}$, $F_{r\hat{y}B}$) in the first position and the second position that is estimated during the previous estimation step.

2. Method according to Claim 1, **characterized in that** the cost function used in the step of estimating the position of the characteristic point ($F_A$, $F_B$) is as

follows:

$$cost = |\,\|P_{RLA} - M_A\| - \|P_{RLB} - M_B\|\,|$$

with:

- $P_{RLA}$ being the point that indicates the intersection between an imaginary plane (Ly) that is parallel to the general plane (P) of the towing platform (16) and is of variable height (y) and an optical ray ($R_{FA}$) of the camera (24) that passes through the characteristic point ($F_A$) of the first position;
- $M_A$ being the second anchoring point in the first position;
- $P_{RLB}$ being the point that indicates the intersection between said imaginary plane (Ly) that is parallel to the general plane (P) of the towing platform (16) and is of variable height (y) and an optical ray ($R_{FB}$) of the camera (24) that passes through the characteristic point ($F_B$) of the second position; and
- $M_B$ being the second anchoring point in the second position.

3. Method according to any one of the preceding claims, **characterized in that** the step (400) of geometrically determining the angle of rotation ($\alpha2$) between the trailer (18) and the towing platform (16) is obtained by the following computation:

$$\alpha2 \;=\; 2 * sin^{-1}\left(\frac{|F_{R\hat{y}B} - F_{R\hat{y}A}|/2}{|F_{R\hat{y}A} - M|}\right)$$

with:

- $F_{r\hat{y}B}$ being the estimated characteristic point in the second position;
- $F_{r\hat{y}A}$ being the estimated characteristic point in the first position; and
- M being the second anchoring point.

4. System (20) for determining the angular position of a vehicle (10) comprising a towing vehicle (14), a towing platform (16) articulated on the towing vehicle (14) at a first anchoring point (N), at least about a first axis of rotation (O1) generally perpendicular to the general plane (P) of the towing platform (16), and a trailer (18) articulated on the towing platform (16) at a second anchoring point (M), at least about a second axis of rotation (O2) generally perpendicular to the general plane (P) of the towing platform (16), at a second anchoring point (M), the system (20) comprising a computer (22) and a camera (24) oriented toward the trailer (18), **characterized in that** it is configured to implement the method according to any one of the preceding claims.

5. Computer program product, comprising code instructions which cause the system according to Claim 4 to implement the steps of the method according to any one of Claims 1 to 3.

[Fig. 1]

[Fig. 1]

[Fig. 2]

[Fig. 2]

[Fig. 3]

[Fig. 3]

[Fig. 4]

[Fig. 4]

[Fig. 5]

[Fig. 5]

[Fig. 6]

[Fig. 6]

[Fig. 7]

[Fig. 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3106560 A1

- WO 2019202317 A1